# EUROPEAN PATENT SPECIFICATION

(11) **EP 2 714 597 B1**
(45) Date of publication and mention of the grant of the patent: **31.07.2019**
(21) Application number: 12788820.4
(22) Date of filing: 18.05.2012
(51) Int. Cl.: C02F 1/46, C02F 1/52, A01K 63/04

(54) **APPARATUS FOR PURIFYING WATER IN AN AQUARIUM**
VORRICHTUNG ZUR REINIGUNG VON WASSER IN EINEM AQUARIUM
DISPOSITIF DE PURIFICATION DE L'EAU D'UN AQUARIUM

(30) Priority: 26.05.2011 SG 201103820
(43) Date of publication of application: 09.04.2014
(73) Proprietor: Qian Hu Corporation Limited, Singapore 698950 (SG)
(72) Inventor: CHANG, Kuok Weai, Alex, Singapore 568100 (SG); YAP, Ah Seng, Alvin, Singapore 787374 (SG)
(74) Representative: Weidner Stern Jeschke
(86) International application number: PCT/SG2012/000176
(87) International publication number: WO 2012/161656

(56) References cited:
- JP-A- S5 722 632
- JP-A- S54 150 846
- JP-A- 2001 104 957
- KR-A- 20030 084 526
- KR-A- 20110 024 720
- US-A- 3 891 535
- US-A- 5 614 078
- KROPP R ET AL: "A device that converts aqueous ammonia into nitrogen gas", AQUACULTURAL ENGINEERING, ELSEVIER SCIENCE PUBLISHERS LTD, AMSTERDAM, NL, vol. 41, no. 1, 1 July 2009 (2009-07-01), pages 28-34, XP026421652, ISSN: 0144-8609 [retrieved on 2009-06-17]
- RG SAMAN WIJESEKARA ET AL: "Electrochemical removal of ammonia, chemical oxygen demand and energy consumption from aquaculture waters containing different marine algal species", JOURNAL OF CHEMICAL TECHNOLOGY & BIOTECHNOLOGY, vol. 80, no. 12, 1 January 2005 (2005-01-01), pages 1408-1415, XP055151996, ISSN: 0268-2575, DOI: 10.1002/jctb.1343

## Description

### FIELD OF THE INVENTION

The invention relates to an apparatus for purifying water in an aquarium.

### BACKGROUND ART

The following discussion of the background to the invention is intended to facilitate an understanding of the present invention only. It should be appreciated that the discussion is not an acknowledgement or admission that any of the material referred to was published, known or part of the common general knowledge of the person skilled in the art in any jurisdiction as at the priority date of the invention.

Known water purification in aquariums typically use simple mechanical filtration or biological filtration to maintain water quality and to remove waste material build up in the tanks. Such waste material includes, but is not exclusive to ammonia (NH₃), ammonium (NH₄), nitrite (NO₂) and nitrate (NO₃). Mechanical filtration includes passing water through filter pads, but such filter pads require regular change to maintain the water quality. In addition, the size of the mechanical filters is required to be adapted according to the size of the aquariums.

Biological filtration generally involves bacteria or microbes, such as nitrosomonas bacteria and/or other microorganisms that are involved in a nitrifying and denitrifying process in the aquarium which break down the nitrogen-based waste materials. However, such biological filters may be unreliable because they are highly sensitive to water parameters such as temperature, pH level, phosphate level, dissolved oxygen level water hardness level (both general hardness and carbonate hardness) etc. In the event where the water parameters are not conducive for the survival of the microbes or bacteria, they may further contribute to the waste materials instead of breaking down the waste materials.

As waste accumulates in aquariums, high nitrogen concentration in water which is toxic to fishes is often overcome by water change or having a very big filtration unit (which comprises of mechanical and/or biological filtration) to breakdown the waste materials. Water change is a tedious manual process which requires manpower and time, while the breakdown of waste materials into less toxic forms using mechanical and/or biological filtration typically takes a long time and is dependent on the flow unit, type of bio-filter media and also the strains of bacteria present for the filtration.

Kropp et al., Aquacultural Engineering 41 (2009) 28-44 and JP S5722632 A, disclose Advanced Oxidation Process (AOP) that require costly energy sources, such as gamma-ray, ultraviolet light, or reagents such ozone and hydrogen peroxide to form hydroxyl radicals resulting in supply of oxidizing reagents such as hypochlorous acid and toxic byproducts such as trihalomethanes.

Accordingly, the described solutions do not ensure the constant quality of water. Fluctuation in water quality which occurs due to negligence, change of water and/or variation in water parameters are harmful to fish due to waste accumulation.

It is thus an object of the invention to mitigate at least one of the above mentioned problems.

### SUMMARY OF THE INVENTION

The invention is related to the breakdown of waste materials in an aquarium, specifically nitrogen based compounds which includes:
Ammonia (NH₃), which is primarily released into aquariums from fish waste, uneaten food, or a fish that dies in the tank. This is particularly dangerous as it leads to ammonia poisoning which could kill fish;
Ammonium (NH₄), while less harmful than NH₃, turns into NH₃ when the water pH is higher than 7;
Nitrite (NO₂) is created when the poisonous NH₃ is broken down. NO₂ is a toxin and can kill the fish not kept under control; and
Nitrate (NO₃) are the product of NO₂ being broken down in the aquarium. NO₃, while less toxic, may still harm the fish. NO₃ may be eventually broken down and converted into Nitrogen Gas (N₂).

In accordance with a first aspect of the present invention, there is provided an apparatus of purifying water in an aquarium according to claim 1.

Preferably the operable voltage for the electrochemical process is between 5 to 24 volts. More preferably the operable voltage is between 5 to 9 volts.

Suitably, the electrodes are placed at a distance of 5 to 10 centimetres between each other.

Preferably, the operable current is about 0.5 milli-amperes.

A further aspect of the invention provides, a process for purifying waste water in an aquarium to convert ammonium, ammonia, nitrite and/or nitrate into nitrogen gas comprising placing the apparatus of claim 1 or its dependent claims in an aquarium, passing a electrical charge between two titanium-based electrodes within the aquarium wherein a carbon-based catalyst suitable for generating an hydroxyl radical is placed between the titanium-based electrodes and lowering the pH of the water in the aquarium with a filter medium placed in an anaerobic media casing.

### BRIEF DESCRIPTION OF THE DRAWINGS

The present invention will now be described, by way of example only, with reference to the accompanying drawings, in which:
Figure 1 is a schematic representation of the purifying apparatus in accordance with an embodiment of the present invention.
Figure 2 is a schematic representation of the components of a purifying apparatus in accordance with an embodiment of the present invention.
Figure 3 Is a side view and a top view of a schematic representation of the purifying apparatus in accordance with an embodiment of the present invention.
Figure 4a is a step wise method of replacing a catalyst cartridge and 4b is a step wise method of replacing an anaerobic cartridge of the purifying apparatus in accordance with an embodiment of the present invention.
Figure 5A and 5B is a depiction of the purifying apparatus in use within an aquarium and Figure 5C is a schematic representation of the electrochemical filtration method in accordance with an embodiment of the present invention.
Figure 6 is a graph of the level of pH (6A), total nitrogen (6B), ammonia (6C), Nitrite (6D), and nitrate (6E) in either tank A containing a cartridge of a carbon-based catalyst suitable for generating hydroxyl radical (OH⁻) or tank B containing only the activated carbon substrate.

### DESCRIPTION OF EMBODIMENTS OF THE INVENTION

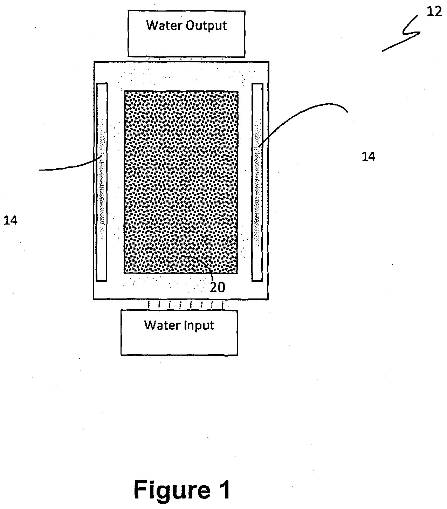

In accordance with a first embodiment of the invention there is an apparatus 10 for purifying water in an aquarium comprising an electrochemical flocculation reactor 12 as shown in Figure. 1. The electrochemical flocculation reactor comprises a plurality of electrodes 14. Electrodes 14 are made of at least one type of titanium alloy.

Prior to use, the following parameters of the electrochemical flocculation reactor have to be tuned/determined as follows:
Distance between the electrodes 14 - 5 to 10 centimetres.
Operable voltage range - 5 to 24 Volts
Operable current range - 0.5 milli-amperes

The apparatus 10 will next be described in the context of its operation.

For an aquarium size of water capacity of about 80 to 200 litres, a user switches on the apparatus 10 to about 5 volts. The anodes 14a are made of titanium alloy. The cathodes 14b are made of titanium alloy. In the preferred embodiment the anodes 14a and cathodes 14b are the same titanium alloy, but it will be appreciated by a skilled person in the art that the anode and cathode may be different titanium compounds. In a preferred embodiment the anode 14a and the cathode 14b comprise a titanium carbon fibre.

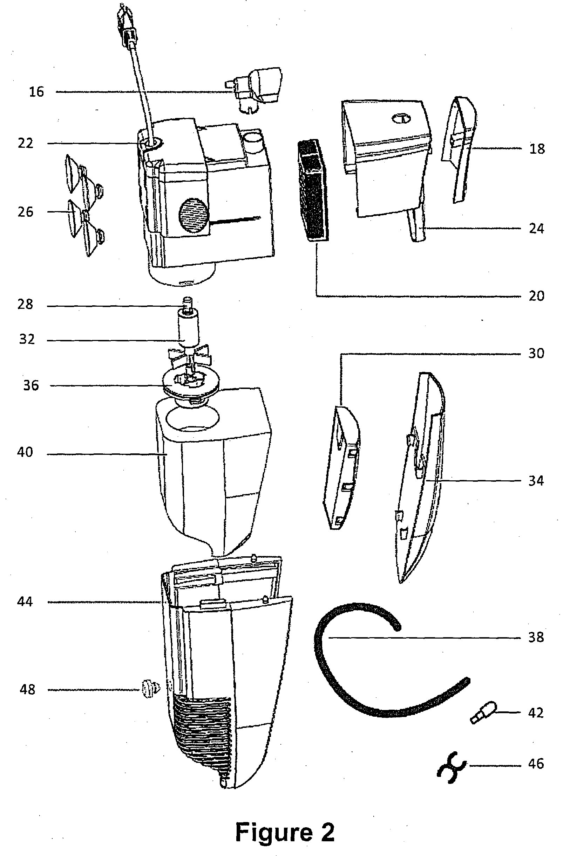

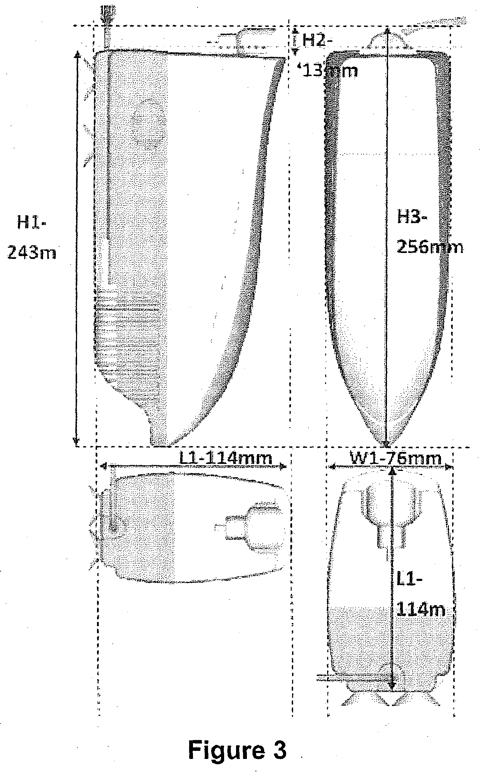

Figure 2 depicts the components of the apparatus 10 according to the invention, having a motor in a motor housing 22 that fits a catalyst cartridge 20 within one side of the motor housing 22. The catalyst cartridge 20 is fixed in place within the motor housing 22 with a motor housing support casing 24 and secured with a motor housing front cover 18 and the output nozzle 16. The side opposite where the catalyst cartridge 20 is inserted into the motor housing 22 is fixed a series of suction cups 26 that help to secure the apparatus 10 to the side of an aquarium tank 54 any other means of securing the apparatus 10 to the side of an aquarium tank 54 known to those in the art such as a hook would also be suitable. A motor drive shaft 27 is formed with a ceramic shaft 28 surrounded by an impeller 32 and an an impeller cover 36. Any drive shaft capable of driving a motor known to a person skilled in the art would also be suitable. At the base of the motor housing 22 fits biological section 35 comprising a biological housing 44 into which fits a block of foam 40 preferably superior bio foam. The foam is formed to have a recess into which the impeller cover 36 of the motor drive shaft 27 fits. Sitting against one side of the foam 40 is an anaerobic media casing 30 that can be filled with any suitable filter medium such as peats moss where it is required to lower the pH, coral chips where it is required to lower the pH, or any other medium known to those skilled in the art. The biological housing is completed with an air tube 38. An air regulator valve 42 and an air tube clip 46 which are all secured in place with an anaerobic cover 34. Vibration of the device is minimised with an anti vibraration stud 48 that steadies the apparatus 10 against the side of the aquarium tank 54.A side view of the purifying apparatus in accordance with an embodiment of the present invention is shown in Figure 3 where the dimensions of a device suitable for a 100 to 300 litre tank is given where L1 is 114mm, H1 is 243mm, H2 is 13mm, H3 is 256mm and W1 is 76mm. A device of this size will provide a flow rate of 500-550 litres per hour, and requires 13 watts of electricity. In other embodiments the sizes may vary to provide different flow rates that would be suitable for different tank volumes. A tank size of 100 litres may require a flow rate of 250 to 300 litres per hour or a tank size above 300 litres may require a flow rate of 800 to 1000 litres per hour. The larger the volume of the tank size the faster the flow rate would be needed and similarly for smaller tank volumes a relatively smaller flow rate would be needed.

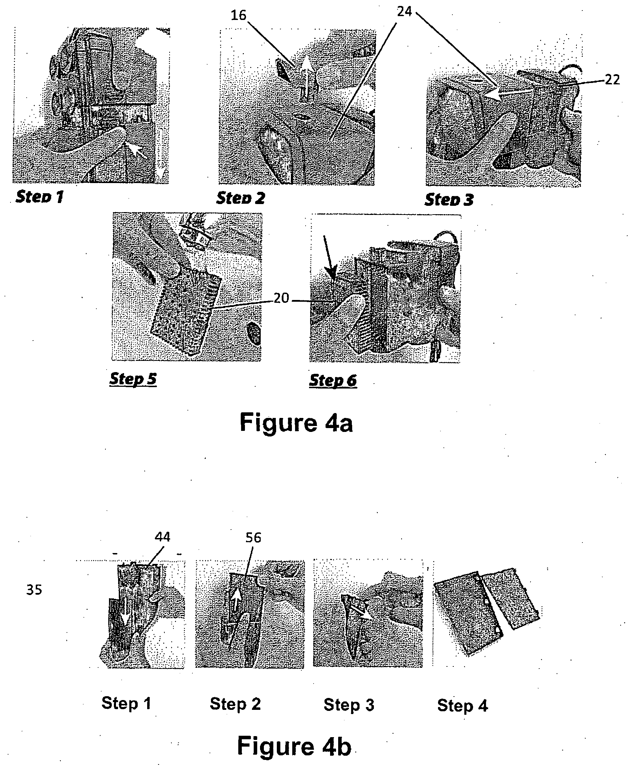

To replace the catalyst cartridge 20 the step wise method of figure 4a can be followed in step 1 the biological section 35 from the motor housing 22 by pressing gently on the side of the biological section 35 with fingers (as indicated) and pulling it apart firmly. In step 2 the output nozzle 16 is removed by firmly pulling it up vertically. In step 3 the motor housing support casing 24 and front cover 18 is gently slid off the motor housing 22 containing the catalyst cartridge 20 therein. The old catalyst cartridge 20 may be discarded, step 4 and a new catalyst cartridge 20 prepared as shown in step 5 by rinsing the catalyst cartridge 20 thoroughly under a running tap. In step 6 place the catalyst cartridge 20 into the motor housing 22 with the flat side exposed and facing away from the motor housing 22.

To replace the anaerobic chamber 30 the step wise method of figure 4b can be followed, where in step 1 the anaerobic chamber 30 is firmly detached from the biological section 35. In step 2 an anaerobic cartridge 56 housed inside the anaerobic cartridge 56 is pushed upwards with a thumb. In step 3 a finger is used to pry open the cartridge 56 such that any suitable filter medium can be added before that system is then put back together.

Another aspect of the invention provides a process of purifying water in an aquarium using an electrochemical flocculation reactor 12 as shown in Figure 1.

Upon switching on the apparatus 10, electrolysis begins and the chemical oxidation process of any ammonium compound in the water is detailed in equations (1) to (6) as follows:

NH₄⁺ + OH⁻ **→** NH₃ + H₂O (1)

NH₃ + O → NH₂ + OH⁻ (2)

NH₂ + O → NH + OH⁻ (3)

NH + O → N + OH⁻ (4)

N + O → NO (5)

N + N → N₂ (6)

The process not only provides a more efficient pathway for the degradation of waste in aquarium tanks, it also makes sure that the by-products are safe and the energy consumption is kept to its minimum level. The system is capable of enhancing the natural filtration process in aquariums by as much as a few hundred percent when compared to conventional systems.

The electrochemical flocculation reactor comprises a catalyst 20 to assist in the electrochemical process. The catalyst is a carbon-based compound targeted to produce hydroxyl-radicals having an oxidation potential of +2.8 V. The process uses very low electric current to produce OH- reactive ions which quickly break up bio-loads into nitrogen gas, water, and smaller organic and inorganic ions through oxidation. Unlike known electrolysis techniques which use high energy consumption the process is less intrusive energy consumptive and low cost as it uses very low electric current. The amount of catalyst used may be between 10 grams to 50 grams. In addition, the catalyst suitably maintains an effective balanced ecosystem within the aquarium. As the catalyst is a carbon-based compound it is eco-friendly. The process and apparatus can be applied to the ornamental fish industry as it promotes a natural, chemical free environment for all aquatic lives.

The catalyst 20 is made in the form of a cartridge. Active carbon monoliths can be effectively utilised in all operations where active carbon is being applied as a granulate. Active carbon monoliths can be manufactured using special types of coal or carbonaceous material which are susceptible for forming and retaining the monolithic form after thermal treatment. The additional specific property of the monolithic material is low thermal expansion coefficient. The active carbon monoliths are then coated with the carbon based catalyst to form the cartridge medium (Cata-Pure™) 20. The cartage medium 20 catalyses the degradation process without the need of a high current. Further, the cartridge medium 20 catalyses the degradation process at room temperature and at a pH suitable for an aquarium ecosystem.

It is to be appreciated that while equation (5) includes the formation of NO as an intermediate species may not be easily picked up by typically methods such as temperature programmed reaction spectroscopy (TPRS), electron energy loss spectroscopy (EELS) and low energy electron diffraction (LEED) due to ambiguities of the NO frequency spectrum.

The process has the advantage of bypassing most of the stages in the nitrification process and the de-nitrification process at a temperature and pH suitable for an aquarium ecosystem. Hence, maintaining ammonia, nitrate and nitrite at a very low level suitable for aquatic plants and animals.

It is to be appreciated that the combination of the various parameters such as voltage range, type of electrodes, distance between electrodes, catalyst type and quantity assist in the generation of an effective amount of hydroxyl radicals for achieving the desired purpose.

The process may be further coupled with natural bio-filtration. This will allow the water quality in the aquariums to be more stable and also more resistant to nutrient surges such as an ammonia surge, which are detrimental to the fish well-being.

### Use of the system

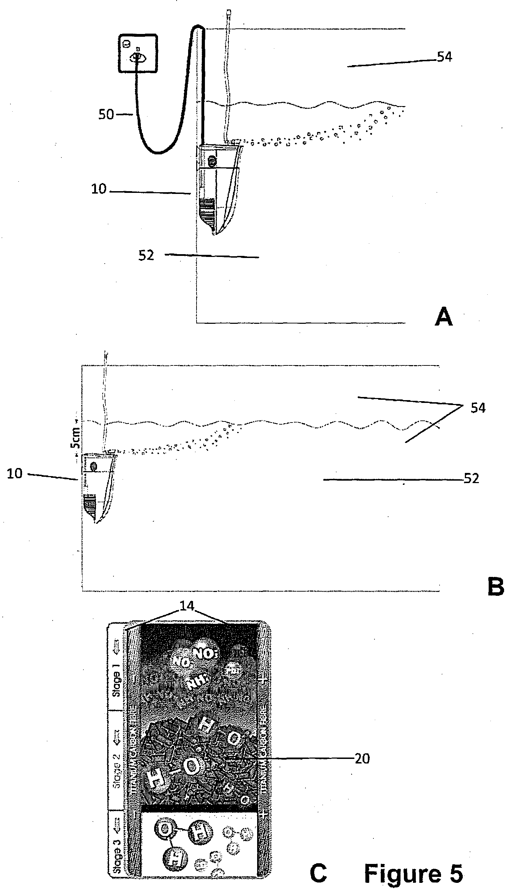

As depicted in Figure 5 A and B the apparatus 10 is placed in an aquarium tank 54 filled with water 52. The device may use household electricity via a cord 50 plugged into a household socket. It is important that the apparatus 10 is submerged in the water 52. Within the water 52 of an aquarium tank 54 there is a biological load of organic nutrients from leftover food, debris and waste that include ammonia, nitrite, nitrate and phosphate. The apparatus 10 is placed within the water of the aquarium. The water of the aquarium then forms the electrolyte fluid 52 of the electrochemical flocculation reactor 12. The catalyst cartridge 20, containing the special formulated medium of a carbon-based catalyst suitable for generating hydroxyl radical (OH⁻) forms a special reaction chamber as depicted in Figure 5C. A very low current of about 5mA passes through the titanium carbon fibre electrodes 14 saving energy and inducing the generated hydroxyl radicals to break down ammonia nitrate and nitrate to nitrogen gas N₂ as described above. The effect is shown in improved water quality, healthier fishes with more vibrant colours, faster growth as well as enhanced fish maturity.

1st unit was made as an external device of the aquarium as part of the water filtering.

Several comparison tests were conducted which include;
a. Over population of fish
b. Over feeding of fish
c. Fishes that is sick

All tests indicated that the system performed well as compared to the traditional bacteria system. In particular the system performs excellently when there is a sudden spike in fixed nitrogen based compounds dissolved in the water of an aquarium.

A further test was conducted to observe the pH level, total nitrogen, ammonia, nitrite and nitrate levels in two separate tanks. The apparatus 10 used was similar to that depicted in figure 5.

Tank A, contained a cartridge 20, containing the special formulated medium of a carbon-based catalyst suitable for generating hydroxyl radical (OH⁻).

Tank B, contained a cartridge containing only the activated carbon substrate with no catalyst.

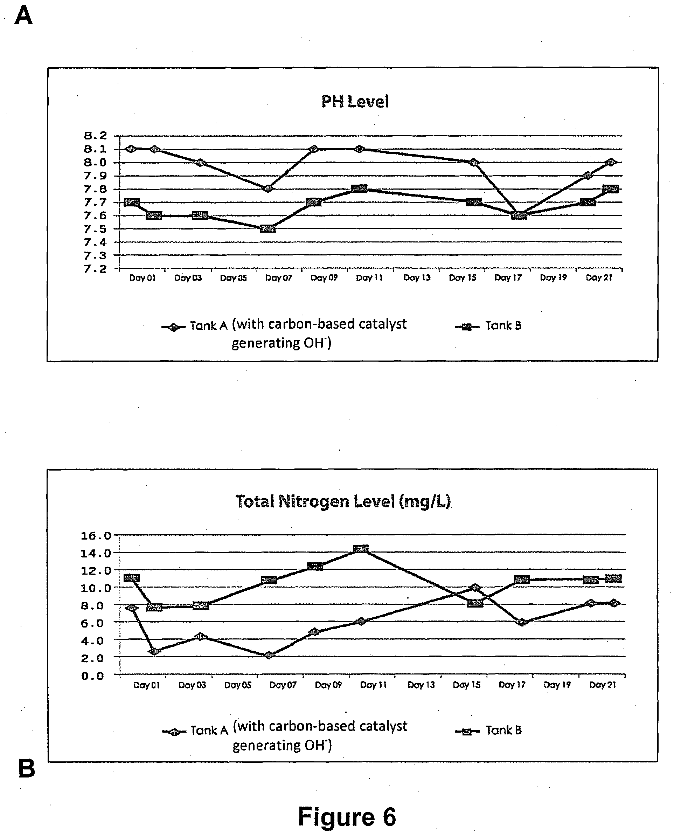

The pH level in the tank A containing the catalyst is higher than in tank B (Figure 6A) which is expected with the presence of the hydroxyl ions.

The total nitrogen level in tank A appears to be lower and more stable (figure 6B) due to the hydroxyl effect which breaks down organic nutrients found in the tank, thereby completing the nitrogen cycle at a more stable and effective rate.

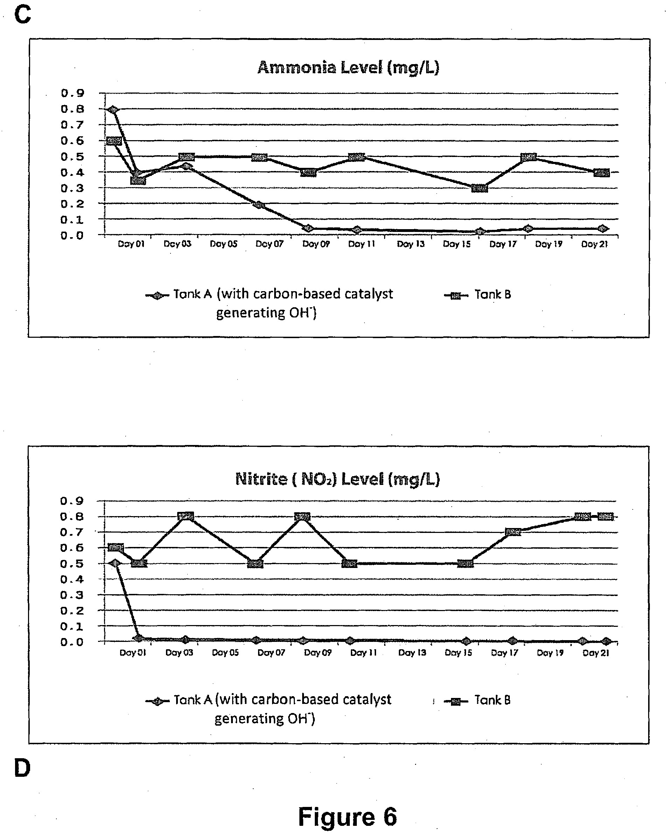

The ammonia level in tank A is visibly lower and more stable compared to tank B (figure 6C). This creates a safer environment for fish, as a high ammonia level is unlikely to result when the device is in operation.

The nitrite level in tank A is maintained at an untraceable level as compared to tank B (figure 6D). This clearly demonstrates one of the advantages of the invention.

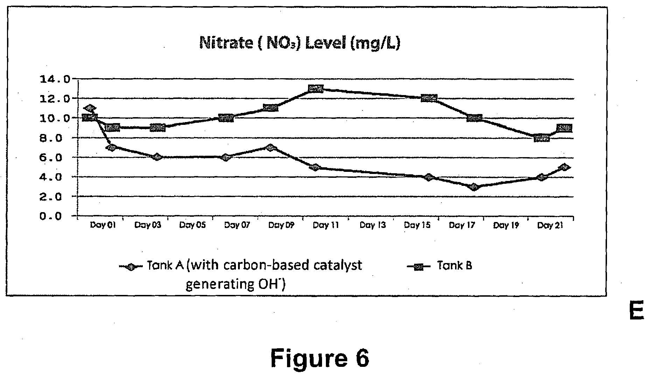

The nitrate level in tank A is averaging 5mg/L lower than in tank B (figure 6E) again showing the efficiency of the system.

### Variants

- Direct or alternating electrical current and voltage of varying strength to electrodes may be applied.

## Claims

1. An apparatus (10) for purifying waste water in an aquarium comprising an electrochemical flocculation reactor (12); the electrochemical flocculation reactor comprising titanium-based electrodes (14) operable to convert ammonium, ammonia, nitrite and/or nitrate into nitrogen gas in the aquarium, a motor in a motor housing (22), a catalyst cartridge (20) within one side of the motor housing (22), a motor housing support casing (24), a motor housing front cover (18), an output nozzle (16), a means of securing the apparatus (10) to the side of an aquarium tank, which is opposite the side where the catalyst cartridge (20) is inserted into the motor housing (22), a motor drive shaft (27) formed with a ceramic shaft (28) surrounded by an impeller (32) and an impeller cover (36), a biological housing (44) into which fits a block of foam (40) formed to have a recess into which the impeller cover (36) of the motor drive shaft (27) fits, an anaerobic media casing (30) filled with a filter medium to lower the pH such as peats moss or coral chips, an air tube (38), an air regulator valve (42), an air tube clip (46), an anaerobic cover (34), an antivibration stud (48) and a carbon-based catalyst suitable for generating hydroxyl radicals.

2. The apparatus (10) according to claim 1, wherein the operable amount of carbon-based catalyst is between 10 to 50 grams.

3. The apparatus (10) according to any of the preceding claims, wherein the operable voltage for the electrochemical process is between 5 to 24 volts.

4. The apparatus (10) according to any of the preceding claims, wherein the electrodes 14 are placed at a distance of 5 to 10 centimetres between each other.

5. The apparatus (10) according to any of the preceding claims, wherein the operable current is about 0.5 milli-amperes.

6. A process for purifying waste water in an aquarium to convert ammonium, ammonia, nitrite and/or nitrate into nitrogen gas comprising placing the apparatus of any one of claims 1 to 5 in an aquarium, passing a electrical charge between two titanium-based electrodes (12) within the aquarium wherein a carbon-based catalyst suitable for generating an hydroxyl radical is placed between the titanium-based electrodes.

7. The process of claim 6 wherein the electrical charge has a voltage of 5 to 24 volts.

8. The process of claim 6 wherein the electrical charge has a current of 5 milli-amperes.

9. The process of any one of claims 6 to 8 further comprising the step of adding a microorganism suitable for biological filtration.

## Patentansprüche

1. Vorrichtung (10) zur Reinigung von Schmutzwasser in einem Aquarium, umfassend einen elektrochemischen Flockungsreaktor (12); wobei der elektrochemische Flockungsreaktor Elektroden (14) auf Titanbasis umfasst, die dazu dienen, Ammonium, Ammoniak, Nitrit und/oder Nitrat im Aquarium in Stickstoffgas umzuwandeln, einen Motor in einem Motorgehäuse (22), eine Katalysatorpatrone (20) in einer Seite des Motorgehäuses (22), einen Motorgehäuse-Haltebehälter (24), eine Motorgehäuse-Frontabdeckung (18), eine Austragsdüse (16), ein Mittel zur Befestigung der Vorrichtung (10) an der Seite eines Aquariumbehälters, das gegenüber der Seite liegt, wo die Katalysatorpatrone (20) in das Motorgehäuse (22) eingeführt ist, eine Motorantriebswelle (27), die ausgebildet ist mit einer Keramikwelle (28), die umgeben ist von einem Flügelrad (32) und einer Flügelradabdeckung (36), ein biologisches Gehäuse (44), in das ein Block aus Schaum (40) hineinpasst, der so ausgebildet ist, dass er eine Ausnehmung aufweist, in die die Flügelradabdeckung (36) der Motorantriebswelle (27) hineinpasst, ein Anaerobmedium-Behälter (30), der gefüllt ist mit einem Filtermedium, um den pH abzusenken, wie etwa Torfmoos oder Korallenspäne, ein Luftschlauch (38), ein Luftregulatorventil (42), einen Luftschlauchclip (46), eine anaerobe Abdeckung (34), ein Antivibrationsbolzen (48) und ein Katalysator auf Kohlenstoffbasis zur Erzeugung von Hydroxylradikalen.

2. Vorrichtung (10) nach Anspruch 1, wobei die verfügbare Betriebsmenge an Katalysator auf Kohlenstoffbasis zwischen 10 bis 50 Gramm liegt.

3. Vorrichtung (10) nach einem der vorangehenden Ansprüche, wobei die verfügbare Betriebsspannung für das elektrochemische Verfahren zwischen 5 bis 24 Volt liegt.

4. Vorrichtung (10) nach einem der vorangehenden Ansprüche, wobei die Elektroden (14) in einem Abstand von 5 bis 10 Zentimetern zwischeneinander angeordnet sind.

5. Vorrichtung (10) nach einem der vorangehenden Ansprüche, wobei der verfügbare Betriebsstrom etwa 0,5 Milliampere beträgt.

6. Verfahren zur Reinigung von Schmutzwasser in einem Aquarium, um Ammonium, Ammoniak, Nitrit und/oder Nitrat in Stickstoffgas umzuwandeln, welches umfasst, dass die Vorrichtung nach einem der Ansprüche 1 bis 5 in einem Aquarium platziert wird, wobei eine elektrische Ladung zwischen zwei Elektroden (12) auf Titanbasis im Aquarium durchgeleitet wird, wobei ein Katalysator auf Kohlenstoffbasis, der geeignet ist, ein Hydroxylradikal zu erzeugen, zwischen den Elektroden auf Titanbasis platziert wird.

7. Verfahren nach Anspruch 6, wobei die elektrische Ladung eine Spannung von 5 bis 24 Volt aufweist.

8. Verfahren nach Anspruch 6, wobei die elektrische Ladung einen Strom von 5 Milliampere aufweist.

9. Verfahren nach einem der Ansprüche 6 bis 8, das außerdem den Schritt der Zugabe eines Mikroorganismus umfasst, der für biologische Filtration geeignet ist.

## Revendications

1. Appareil (10) pour purifier l'eau sale dans un aquarium, comprenant un réacteur de floculation électrochimique (12) ; le réacteur de floculation électrochimique comprenant des électrodes à base de titane (14) pouvant convertir l'ammonium, l'ammoniaque, les nitrites et/ou les nitrates en azote gazeux dans l'aquarium, un moteur dans un boîtier de moteur (22), une cartouche de catalyseur (20) à l'intérieur d'un côté du boîtier de moteur (22), un carter de support de boîtier de moteur (24), un couvercle avant de boîtier de moteur (18), une buse de sortie (16), un moyen de fixation de l'appareil (10) au côté d'un récipient de l'aquarium qui est opposé au côté où la cartouche de catalyseur (20) est insérée dans le boîtier de moteur (22), un arbre d'entraînement de moteur (27) formé avec un arbre en céramique (28) entouré par une hélice (32) et un couvercle d'hélice (36), un boîtier biologique (44) dans lequel s'ajuste un bloc de mousse (40) formé de manière à présenter un renfoncement dans lequel s'ajuste le couvercle d'hélice (36) de l'arbre d'entraînement de moteur (27), un carter de milieu anaérobie (30) rempli d'un milieu filtrant pour abaisser le pH, comme de la mousse de tourbe ou des morceaux de corail, un tube d'air (38), une soupape de régulation d'air (42), une pince de tube d'air (46), un couvercle anaérobie (34), un goujon antivibrations (48) et un catalyseur à base de carbone apte à générer des radicaux hydroxyle.

2. Appareil (10) selon la revendication 1, dans lequel la quantité utile de catalyseur à base de carbone est comprise entre 10 et 50 grammes.

3. Appareil (10) selon l'une quelconque des revendications précédentes, dans lequel la tension utile pour le processus électrochimique est comprise entre 5 et 24 volts.

4. Appareil (10) selon l'une quelconque des revendications précédentes, dans lequel les électrodes (14) sont placées à une distance de 5 à 10 cm les unes des autres.

5. Appareil (10) selon l'une quelconque des revendications précédentes, dans lequel le courant utile est d'environ 0,5 milliampère.

6. Procédé pour purifier l'eau sale dans un aquarium, pour convertir l'ammonium, l'ammoniaque, les nitrites et/ou les nitrates en azote gazeux, comprenant les étapes consistant à placer l'appareil selon l'une quelconque des revendications 1 à 5 dans un aquarium, faire passer une charge électrique entre deux électrodes à base de titane (12) à l'intérieur de l'aquarium, un catalyseur à base de carbone apte à générer un radical hydroxyle étant placé entre les électrodes à base de titane.

7. Procédé selon la revendication 6, dans lequel la charge électrique présente une tension de 5 à 24 volts.

8. Procédé selon la revendication 6, dans lequel la charge électrique présente un courant de 5 milliampères.

9. Procédé selon l'une quelconque des revendications 6 à 8, comprenant en outre l'étape consistant à ajouter un micro-organisme apte à la filtration biologique.
